# EUROPEAN PATENT APPLICATION

(11) **EP 1 237 314 A1**
(43) Date of publication of application: **04.09.2002**
(21) Application number: 01976800.1
(22) Date of filing: 22.10.2001
(51) Int. Cl.: H04J 13/04

(54) **CELL SEARCH CONTROLLER AND CELL SEARCH CONTROL METHOD**

(30) Priority: 30.10.2000 JP 2000330992
(71) Applicant: MITSUBISHI DENKI KABUSHIKI KAISHA, Tokyo 100-8310 (JP)
(72) Inventor: AIKAWA, Hideto, Mitsubishi Denki Kabushiki K., Tokyo 100-8310 (JP); SHIBUYA, Akihiro, Mitsubishi Denki Kabushiki K., Tokyo 100-8310 (JP)
(74) Representative: Pfenning, Meinig & Partner GbR
(86) International application number: JP0109256
(87) International publication number: WO02037725

(57) **Abstract**

This invention is constituted to include units which executes a step 1 of establishing slottiming synchronization, a step 2 of establishing frame timing synchronization and specifying a scrambling code group, and a step 3 of specifying a scrambling code. The unit which executes the step 1 comprises a p-SCH detection section (2) which detects p-SCH having a specified number of paths, a maximum correlation detected path acquisition section (12) and a multi-path deletion section (13) which extract "n" paths having the higher correlation values from the detected paths (the number of fingers ≤ n < specified number of paths), and a step 2 allocation section (14) which allocates detection timings of s-SCH (Secondary-synchronization channel) corresponding to the n paths to the unit of executing the step 2.

## Description

### TECHNICAL FIELD

The present invention relates to a cell search control device adopted in a W-CDMA system. More specifically, the present invention relates to a cell search control device and a cell search control method for the device capable of extracting only necessary, minimum most probable paths in short time.

### BACKGROUND ART

A conventional cell search control method will be explained. According to W-CDMA, a mobile station receives a Primary-SCH (synchronization channel: p-SCH) and a Secondary-SCH (s-SCH) in order to accomplish synchronization with a base station.

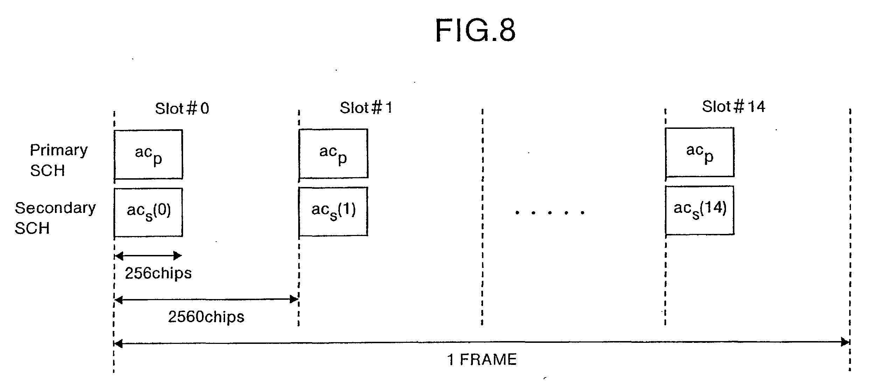

Fig. 8 is a diagram which shows p-SCH transmission timing and s-SCH transmission timing. The p-SCH has the same code among slots . The mobile station searches the p-SCH transmitted from the base station, thereby establishing slot timing. The s-SCH has different codes among slots. The mobile station searches the s-SCH transmitted from the base station, i.e., searches a combination of codes different among slots, thereby establishing frame timing.

The establishment of the timing synchronization is executed by the cell search control section of the mobile station in a known order of a step 1, a step 2 and a step 3. At the step 1, the cell search control section detects the p-SCH to establish slot synchronization. At the step 2, the cell search control section detects the s-SCH to establish frame synchronization. Further, at the step 2, a scrambling code group is determined. At the step 3, a scrambling code in the scrambling code group is specified.

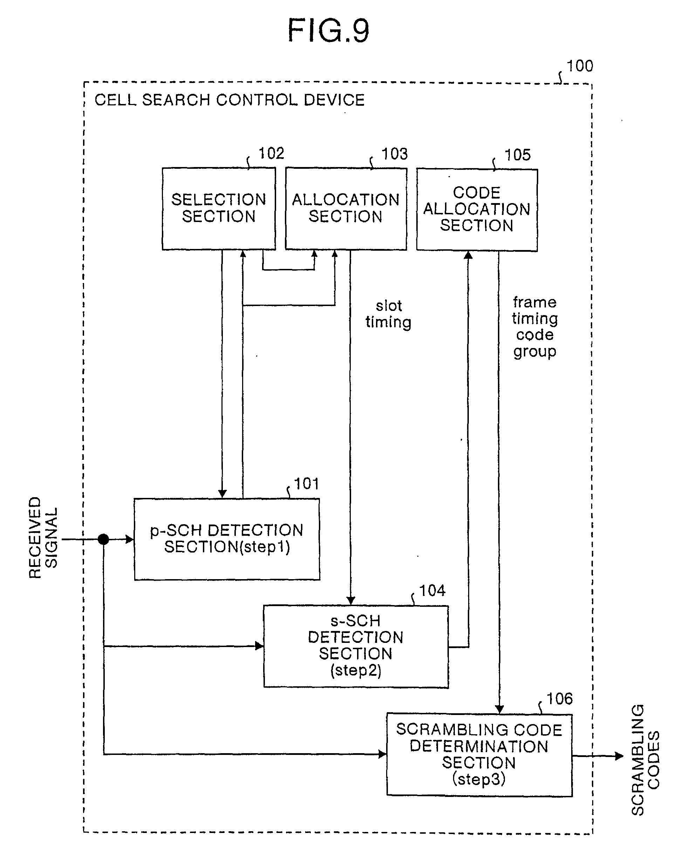

Fig. 9 is a diagram which shows the configuration of a conventional cell search control device. In Fig. 9, reference numeral 100 denotes a cell search control device, 101 denotes a p-SCH detection section, 102 denotes a selection section, 103 denotes an allocation section, 104 denotes an s-SCH detection section, 105 denotes a code allocation section, and 106 denotes a scrambling code determination section.

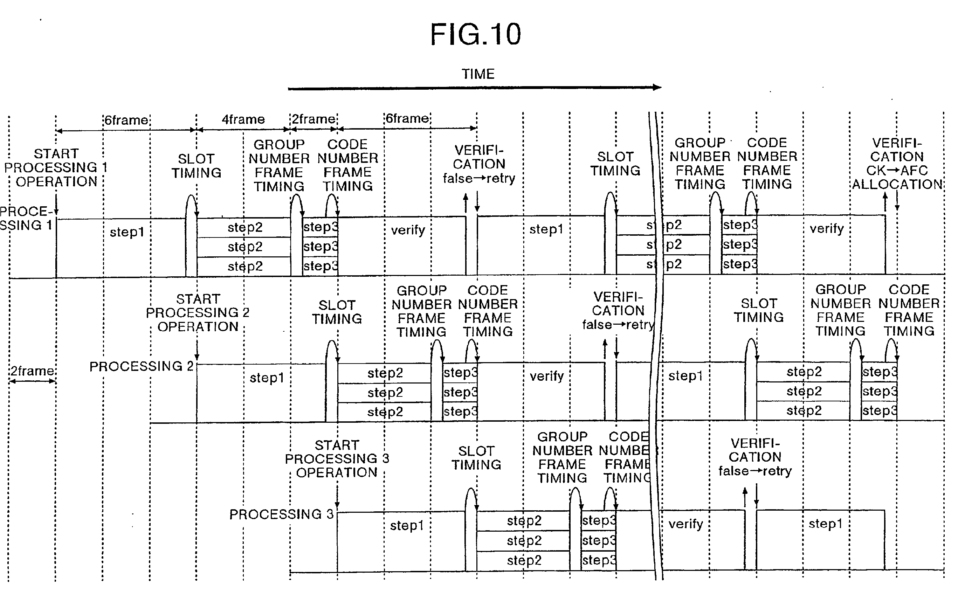

Fig. 10 is a diagram which shows processings at the step 1, step 2, and step 3 in time series. The cell search control device 100 executes the processings at the step 1, step 2, and step 3 by pipeline processing as shown in the figure. After the cell search control device 100 finishes the processings, the mobile station performs a verify (RAKE-SRC: rake search) processing so as to verify that the detection result of the step 3 is correct. The operation of the conventional cell search control device 100 will be explained with reference to Fig. 9 and Fig. 10.

In the conventional cell search control device 100, the p-SCH detection section 101 first detects p-SCH and notifies the selection section 102 of the detection result as the processing of the step 1. The selection section 102 then selects the timings of a maximum of 64 p-SCHs and notifies the allocation section 103 of the selection result. Finally, the allocation section 103 allocates s-SCHs corresponding to the 64 p-SCHs three by three to the s-SCH detection section 104 (see Fig. 10). That is, the detection timings of the 64 s-SCHs are divided into 22 processings to be allocated to the s-SCH detection section 104.

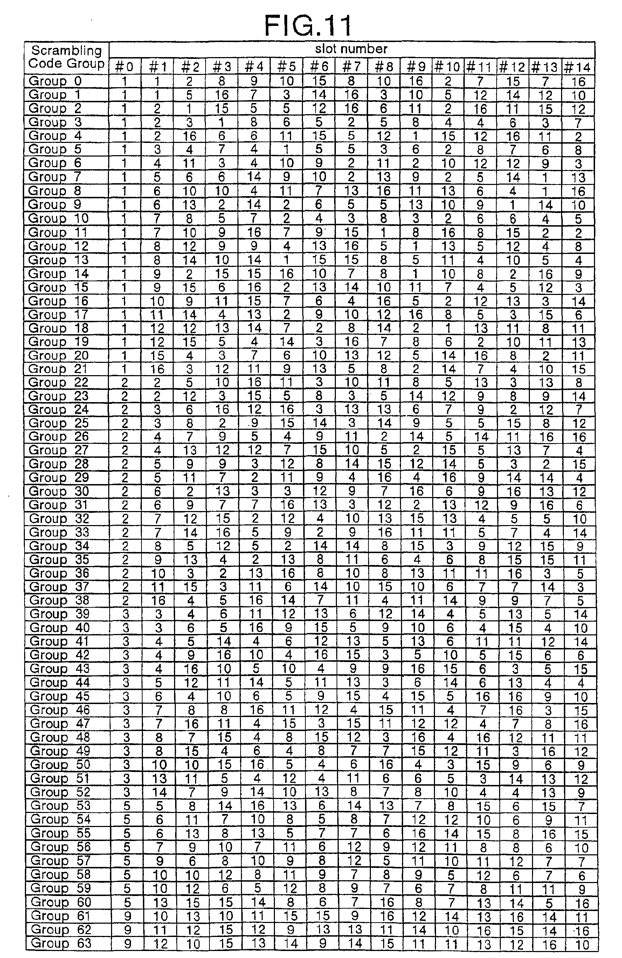

The s-SCH detection section 104 detects the s-SCHs at the allocated timings and notifies the code allocation section 105 of the detection result as the processing of the step 2. The code allocation section 105 searches a scrambling code group corresponding to the received s-SCHs based on a combination of the s-SCHs obtained and a preset table. Fig. 11 is a diagram which shows a table for searching a scrambling code group. In Fig. 11, one from 64 groups is allocated using a combination of s-SCHs for 15 slots.

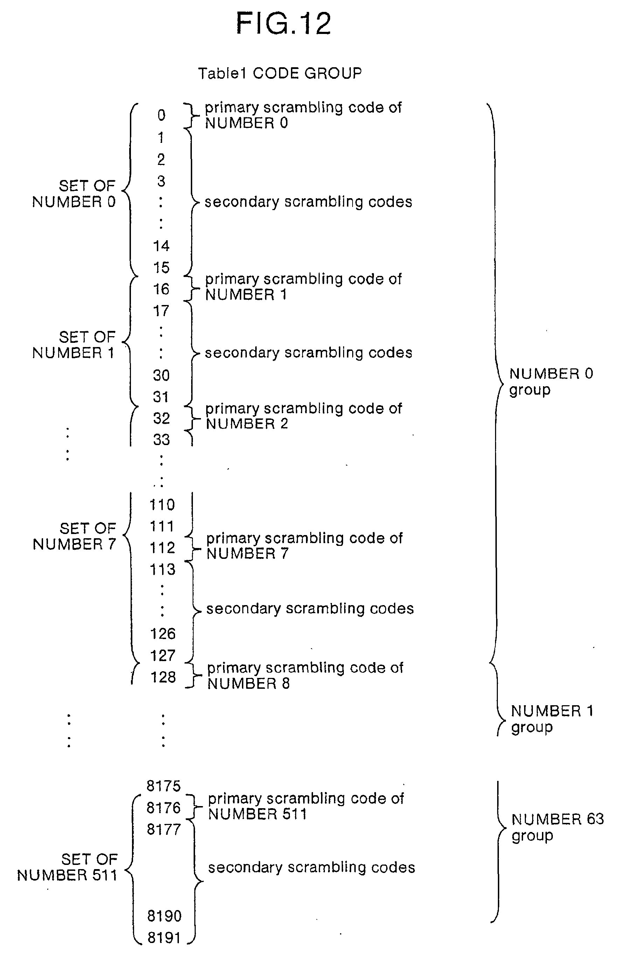

The scrambling code determination section 106 determines two primary-scrambling codes and two secondary-primary codes in, for example, descending order of correlation based on the scrambling code group thus obtained and a table prepared in advance as the processing of the step 3. Namely, two paths are extracted as the most probable paths from multi-paths in descending order of correlation. Fig. 12 shows a table for determining scrambling codes. In Fig. 12, eight sets of scrambling codes are preset per group.

However, according to the conventional cell search control method, although 64 p-SCHs are detected at the step 1, only the three s-SCHs corresponding to three p-SCHs can be processed at one time at the step 2 and step 3. The conventional cell search control method has, therefore, a disadvantage in that it takes considerably long processing time of (64/3) × 6 frames (time required for the processings of the step 2 and step 3: see Fig. 10) = 1320 ms.

At the mobile station, it is necessary to perform a verify (RAKE-SRC) processing so as to verify that the detection result of the step 3 is correct after the end of the processings of the step 1 to step 3. However, it is also necessary to perform the RAKE-SRC in a level detection processing (which is a different processing from the cell search control) and the processing is performed using the same circuit. These processings cannot be, therefore, simultaneously executed. Further, the mobile station is required to put the level detection processing over the cell search control. As a result, the cell search control is suspended to preferentially execute the level detection processing. If so, it takes disadvantageously, considerably long time for the cell search control.

A method of detecting only one path is described in Japanese Patent Application Laid-Open No. 10-126380. However, in a location, such as a city, in which various cells are present and multi-path waves dynamically change, DHO (Diversity Hand-Over) is essential and it is, therefore, necessary to acquire an effective path in short time. If DHO is executed, the mobile station diversely receives paths transmitted from a plurality of base stations and performs a RAKE synthesis. As a result, the conventional method for detecting only one path, has disadvantages in that DHO effect cannot be obtained and the receiving characteristic thereof is deteriorated.

It is, therefore, an object of the present invention to provide a cell search control device and a cell search control method capable of extracting only necessary, minimum most probable paths in short time without omitting the processings of step 1, step 2, step 3, and the verify processing.

### DISCLOSURE OF THE INVENTION

A cell search control device according to the present invention comprises a first synchronization establishment unit'which establishes slot timing synchronization; a second synchronization establishment unit which establishes frame timing synchronization and specifies a scrambling code group; and a code specification unit which specifies a scrambling code. The first synchronization establishment unit includes a path detection unit (corresponding to a p-SCH detection section 2, and a step 1 detected path acquisition section 11 of an embodiment described later) which detects p-SCH (Primary-synchronization channel) having a specified number of paths, a path extraction unit (corresponding to a maximum correlation detected path acquisition section 12, and a multi-path deletion section 13) which extracts "n" paths having higher correlation values from the detected paths, and an allocation unit (corresponding to a step 2 allocation section 14) which allocates detection timings of s-SCH (Secondary-synchronization channel) corresponding to the "n"paths, to the second synchronization establishment unit.

A cell search control device according to the next invention comprises a first synchronization establishment unit which establishes slot timing synchronization; a second synchronization establishment unit which establishes frame timing synchronization and specifies a scrambling code group; and a code specification unit which specifies a scrambling code. The first synchronization establishment unit includes a path detection unit (corresponding to a p-SCH detection section 2 and a step 1 detected path acquisition section 21) which detects p-SCHs of a specified number of paths, a maximum correlation path extraction unit (corresponding to a maximum correlation detected path acquisition section 22) which extracts paths having maximum correlation from the detected paths, a multi-path deletion unit (corresponding to a correlation value correction section 23 and a multi-path deletion section 24) which deletes multi-paths within a predetermined number of chips (predetermined transmission time intervals of respective base stations) around the. maximum correlation paths, and an allocation unit (corresponding to a step 2 allocation section 24) which allocates detection timings of s-SCHs corresponding to "n" paths extracted by "n" times from the maximum correlation path extraction unit, to the second synchronization establishment unit.

A cell search control device according to the next invention comprises a first synchronization establishment unit which establishes slot timing synchronization; a second synchronization establishment unit which establishes frame timing synchronization and specifies a scrambling code group; and a code specification unit which specifies a scrambling code. The first synchronization establishment unit includes a path detection unit (corresponding to a p-SCH detection section 2 and a step 1 detected path acquisition section 31) which detects p-SCHs of paths having levels equal to or higher than a preset path detection threshold, a path detection threshold update unit (corresponding to a step 1 threshold control section 33) which updates the path detection threshold corresponding to the number of detected paths, and an allocation unit (corresponding to a number-of-detected-paths determination section 32) which allocates detection timings of s-SCHs corresponding to the detectedpaths, to the second synchronization establishment unit.

A cell search control method according to the next invention comprises a first step of establishing slot timing synchronization; a second step of establishing frame timing synchronization and specifying a scrambling code group; and a third step of specifying a scrambling code. The first step includes a path detection step (corresponding to step S1) of detecting p-SCHs of a specified number of paths, a path extraction step (corresponding to steps S2, S3) of extracting "n" paths having higher correlation values, from the detected paths, and an allocation step (corresponding to step S4) of allocating detection timings of s-SCHs corresponding to the "n" paths, to processing sections for the second step and on.

A cell search control method according to the next invention comprises a first step of establishing slot timing synchronization; a second step of establishing frame timing synchronization and specifying a scrambling code group; and a third step of specifying a scrambling code. The first step includes a path detection step (corresponding to step S11) of detecting p-SCHs of a specified number of paths, a maximum correlation path extraction step (corresponding to step S12) of extracting paths having maximum correlation from the detected paths, a multi-path deletion step (corresponding to steps S13, S14) of deleting multi-paths within a predetermined number of chips (predetermined transmission time intervals of respective base stations) around the maximum correlation paths, a repetition step (corresponding to steps S12 to S16) of repeatedly executing the maximum correlation path extraction step and the multi-path deletion step using the remaining detected paths until "n" maximum correlation paths are extracted, and an allocation step (corresponding to a step S17) of allocating detection timings of s-SCHs corresponding to the extracted "n" paths, to processing sections for the second step and on.

A cell search control method according to the next invention comprises a first step of establishing slot timing synchronization; a second step of establishing frame timing synchronization and specifying a scrambling code group; and a third step of specifying a scrambling code. The first step includes a path detection step (corresponding to steps S21 and S22) of detecting p-SCHs of paths having levels equal to or higher than a preset path detection threshold, and an allocation step (corresponding to steps S23 and S29) of allocating detection timings of s-SCHs corresponding to the detected paths, to processing sections for the second step and on, if the number of detected paths is smaller than a detected upper limit threshold and larger than a detected lower limit threshold. The first step also includes a first path detection threshold update step (corresponding to steps S23, S24, S25 and S28) of incrementing a path detection threshold by a predetermined number if the number of detected paths becomes equal to or larger than a detected excess threshold (the detected upper limit threshold < the detected excess threshold), and a second path detection threshold update step (corresponding to steps S23 to S28) of incrementing the path detection threshold by the predetermined number, if the number of detected paths becomes equal to or larger than the detected upper limit threshold and smaller than the detected excess threshold and the number of times by which the number of detected paths becomes equal to or larger than the detected upper limit threshold, reaches a predetermined number. The first step further includes a third path detection threshold update step (corresponding to steps S23 to S27) of holding a current path detection threshold, if the number of times by which the number of detected paths becomes equal to or larger than the detected upper limit threshold and smaller than the detected excess threshold, does not reach the predetermined number. The first step further includes a fourth path detection threshold update step (corresponding to steps S29, S30, S31 and S34) of decrementing the path detection threshold by the predetermined number, if the number of detected paths is equal to or smaller than a detected insufficient threshold (the detected lower limit threshold > the detected insufficient threshold). The first step further includes a fifth path detection threshold update step (corresponding to steps S29 to S34) of decrementing the path detection threshold by the predetermined number, if the number of times by which the number of detected paths becomes equal to or smaller than the detected lower limit threshold and larger than the detected insufficient threshold, reaches a predetermined number. The first step further includes a sixth path detection threshold update step (corresponding to steps S29 to S33) of holding the current path detection threshold if the number of times by which the number of detected paths becomes equal to or smaller than the detected lower limit threshold and larger than the detected insufficient threshold, does not reach the predetermined number.

### BRIEF DESCRIPTION OF THE DRAWINGS

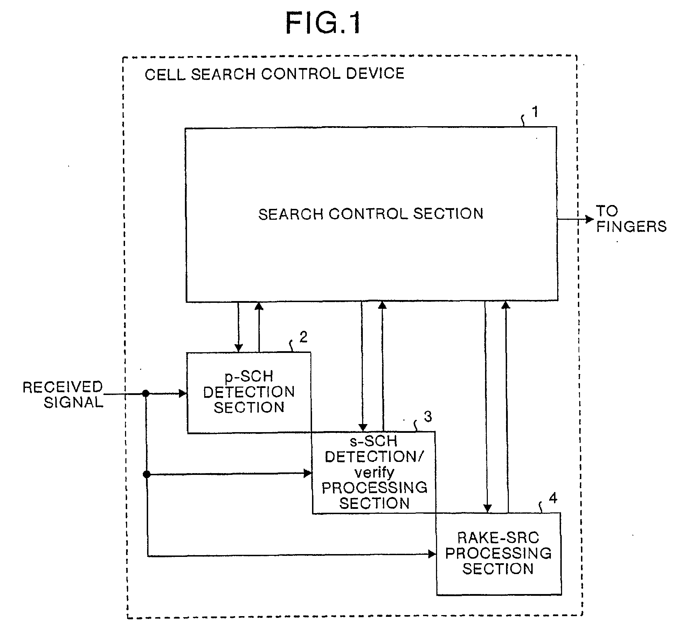

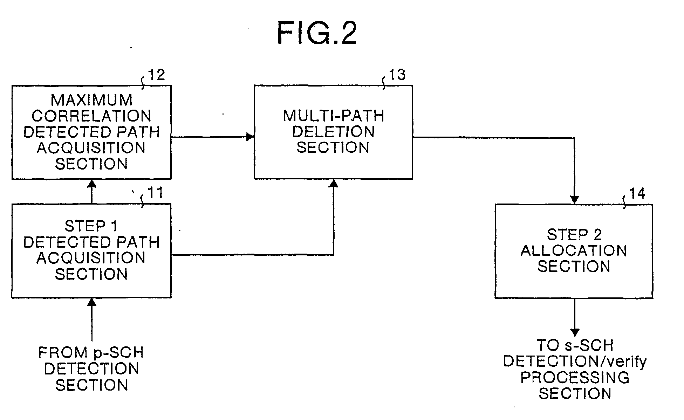

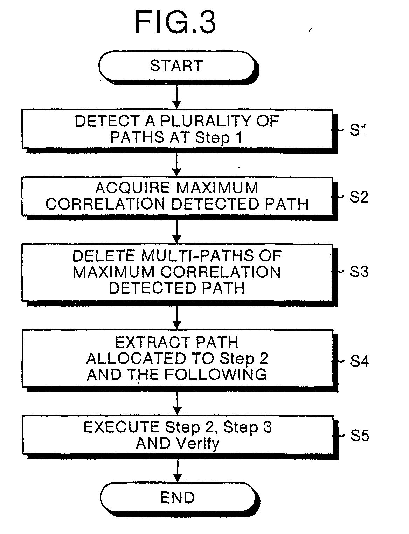

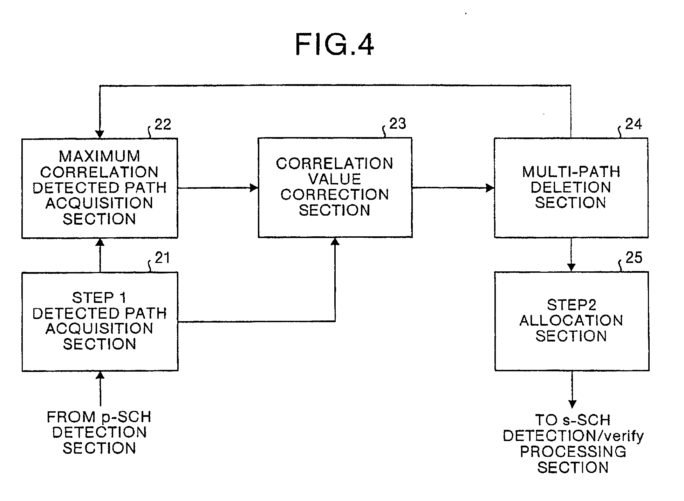

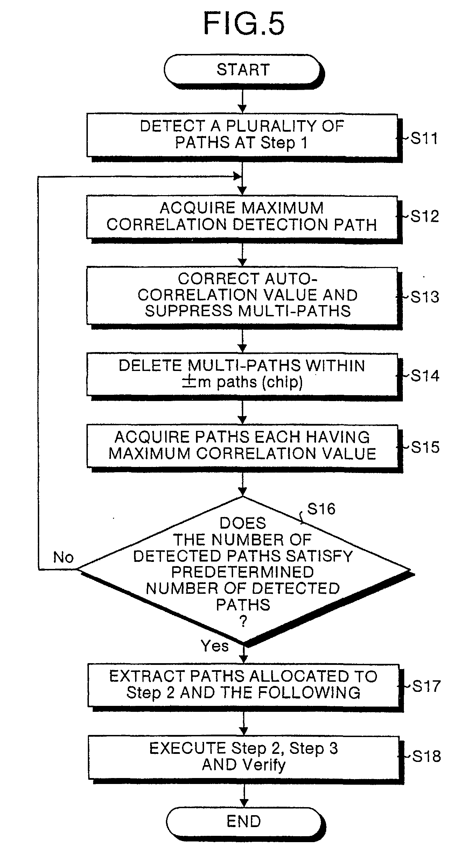

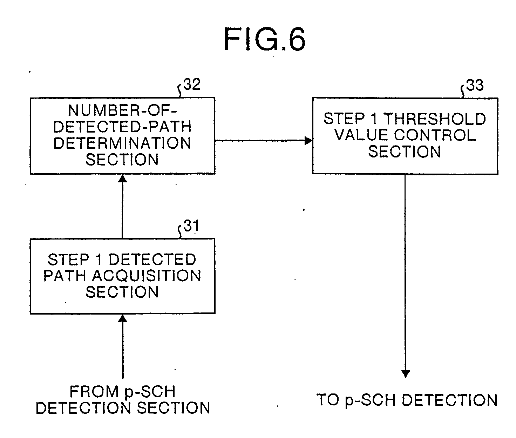

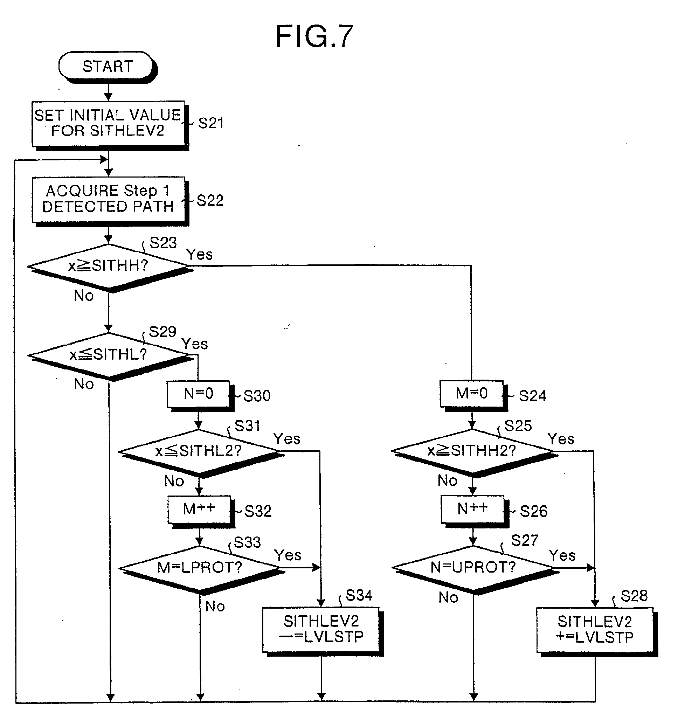

Fig. 1 is a diagram which shows the configuration of a cell search control device according to the present invention; Fig. 2 is a diagram which shows the internal configuration of a cell search control section in a first embodiment; Fig. 3 is a flow chart which shows a cell search control method in the first embodiment; Fig. 4 is a diagram which shows the internal configuration of a cell search control section in a second embodiment; Fig. 5 is a flow chart which shows a cell search control method in the second embodiment; Fig. 6 is a diagram which shows the internal configuration of a cell search control section in a third embodiment; Fig. 7 is a flow chart which shows a cell search control method in the third embodiment; Fig. 8 is a diagram which shows p-SCH transmission timing and s-SCH transmission timing; Fig. 9 is a diagram which shows the configuration of a conventional cell search control device; Fig. 10 shows the processings of a step 1, a step 2 and a step 3 in time series; Fig. 11 is a diagram which shows a table for searching a scrambling code group; and Fig. 12 is a diagram which shows a table for determining scrambling codes.

### BEST MODE FOR CARRYING OUT THE INVENTION

Embodiments of the cell search control device according to the present invention will be explained hereinafter in detail with reference to the drawings. It is noted that this invention is not limited by these embodiments.

### First Embodiment:

Fig. 1 is a diagram which shows the configuration of the cell search control device according to the present invention. In Fig. 1, reference numeral 1 denotes a search control section, 2 denotes a p-SCH detection section, 3 denotes an s-SCH detection/verify processing section, and 4 denotes a RAKE-SRC processing section. In this embodiment, by employing these constituent elements, time required for cell search control is shortened and only necessary, minimum most probable paths are extracted.

For example, at a mobile station, even if 64 p-SCHs are acquired, the number of paths used for DHO (Diversity Hand-Over) is equal to at most the number of fingers. Therefore, it suffices that the mobile station always holds only information on paths the number of which is equal to the number of fingers + α from among detected paths. In addition, at a step 1, only slot timing is detected and it is therefore impossible to determine which base station transmits the p-SCHs of the detected paths. However, it is possible to suppress multi-paths by correcting the other detection results based on a path autocorrelation indicating a maximum correlation value. Further, if a cell diameter is, for example, about 10 km and a sector cell angle is assumed as 60°, the difference in receiving timing between a direct wave and a reflected wave is about 20 chips. Therefore, paths within ±20 chips from the path having the maximum correlation value can be assumed as paths transmitted from the other base stations.

Judging from the above, in this embodiment, the number of detected paths at the step 1 is limited, whereby time required for cell search control is shortened and only necessary, minimum most probable paths are extracted.

A cell search control method in this embodiment, i.e., a path control method at the step 1 will next be explained in detail with reference to the drawings. As for the operations of a step 2 and the following, the cell search control method is the same as the conventional cell search control method except that the number of allocated s-SCH receiving timings is decreased.

Fig. 2 is a diagram which shows the internal configuration of the cell search control section 1 in the first embodiment. Reference numeral 11 denotes a step 1 detected path acquisition section, 12 denotes a maximum correlation detected path acquisition section, 13 denotes a multi-path deletion section, and 14 denotes a step 2 allocation section. Fig. 3 is a flow chart which shows the cell search control method in the first embodiment.

At a mobile station, the p-SCH detection section 2 detects, for example, p-SCHs of 64 paths as the processing of the step 1 (at step S1) and notifies the step 1 detected path acquisition section 11 of the detection result.

The step 1 detected path acquisition section 11 receives the path detection result, and notifies the maximum correlation detected path acquisition section 12 and the multi-path deletion section 13 of the path detection result. The maximum correlation detected path acquisition section 12 detects paths in which maximum correlation has been detected ("maximum correlation detected paths") from the received path detection result (at step S2) and notifies the multi-path deletion section 13 of the detection result.

The multi-path deletion section 13 which has received the maximum correlation detected path, corrects the correlation values of multi-paths around the received maximum correlation detected path, extracts "n" paths having higher correlation values from the corrected correlation values (at step S3) and notifies the step 2 allocation section 14 of the extraction result. Since the number of paths allocated simultaneously to fingers depends on the number of the fingers, the number of paths "n" to be extracted at one time may be, for example, about twice as large as that of the fingers (the paths detected at the step 1 include all multi-paths and the paths of the other sectors).

The step 2 allocation section 14 which has received the extraction result, allocates s-SCHs corresponding to, for example, p-SCHs of the "n" extracted paths to the s-SCH detection/ verify processing section 3 (at step S4) That is, the detection timings of "n" s-SCHs are allocated to the s-SCH detection/ verify processing section 3.

Thereafter, the s-SCH detection/verify processing section 3 executes the processings of the step 2, step 3 and the verify processing as in the case of the conventional art (at step S5). According to the conventional art, the processings of the step 1, step 2, step 3, and the verify processing are repeatedly executed by the pipeline processing until the processing of the step 2 to the verify processing are conducted to all the detected 64 paths (the step 1 is also repeatedly executed: see Fig. 10). In this embodiment, by contrast, the step 1 is executed only once and then the processing of the step 2 to the verify processing are conducted to the "n" extracted paths. In other words, in this embodiment, the step 1 is not repeatedly executed.

As can be seen, in this embodiment, the maximum correlation detected paths are detected from the detected paths, and the correlation values of multi-paths around the received maximum correlation detected paths are corrected. By doing so, "n" paths having higher correlation values are extracted from the corrected correlation values and the receiving timings of the "n" extracted paths are allocated to the s-SCH detection/verify processing section 3. It is, therefore, possible to considerably shorten processing time required for cell search control compared with that of the conventional art in which the step 2 and the following processings are conducted to all the 64 detected paths.

Since the processing time required for cell search control can be shortened, the probability that the verify (RAKE-SRC) processing for verifying that the detection result of the step 3 is correct and the level detection processing (RAKE-SRC) are simultaneously executed is decreased. It is, therefore, possible to prevent processing time required for preferential control from increasing.

Since the processing time required for cell search control is shortened and only necessary, minimum most probable paths are extracted, it is possible to enhance receiving characteristic due to the DHO effect.

### Second Embodiment:

Fig. 4 is a diagram which shows the internal configuration of a cell search control section 1 in a second embodiment. Reference 21 denotes a step 1 detected path acquisition section, 22 denotes a maximum correlation detected path acquisition section, 23 denotes a correlation value correction section, 24 denotes a multi-path deletion section, and 25 denotes a step 2 allocation section. Fig. 5 is a flow chart which shows a cell search control method in the second embodiment.

Since the overall configuration of the cell search control device is the same as that shown in Fig. 1 related to the first embodiment, same constituent elements are denoted by the same reference numeral and will not be explained herein. Therefore, in this embodiment, the number of detected paths at the step 1 is limited for the same reason as that explained above, whereby time required for cell search control is shortened, and only necessary, minimum most probable paths are extracted.

A cell search control method in this embodiment, i.e., a path control method at the step 1 will next be explained in detail with reference to the drawings. As for the operations of the step 2 and the following, the cell search control method is the same as the conventional cell search control method except that the number of allocated s-SCH receiving timings is decreased. Further, this embodiment is based on the assumption that respective base stations transmit signals to a mobile station at predetermined time intervals.

At a mobile station, the p-SCH detection section 2 detects, for example, p-SCHs of 64 paths as the processing of the step 1 (at step S11), and notifies the step 1 detected path acquisition section 21 of the detection result.

The step 1 detected path acquisition section 21 receives the path detection result, and notifies the maximum correlation detected path acquisition section 22 and the correlation value correction section 23 of the path detection result. The maximum correlation detected path acquisition section 22 detects a maximum correlation detected path from the received path detection result (at step S12), and notifies the correlation value correction section 23 of the detection result.

The correlation value correction section 23 which has received the maximum correlation detected path, corrects the autocorrelation value of multi-paths around the received maximum correlation detected path, suppresses the multi-paths (at step S13), and notifies the multi-path deletion section 24 of the corrected correlation values. Thereafter, the multi-path deletion section 24 deletes multi-paths within chips the number of which corresponds to the predetermined time around the maximum correlation detected paths (at step S14), extracts only paths each having a maximum correlation value after the correction (at step S15), and notifies the step 2 allocation section 25 of the extraction result.

Thereafter, in the cell search control device, the maximum correlation detected path acquisition section 22 detects maximum correlation detected paths from the remaining detection results (at step S12), repeatedly executes the processings of the steps S12 to S15 until the number of detected paths satisfies a desired number "n" of paths or there is no other detected path (No at step S16). When the number of detected paths reaches the desired number "n" of paths or there is no other detected path (Yes at step S16), the maximum correlation detected path acquisition section 22 proceeds to the processing of step S17. Since the number of paths allocated simultaneously to fingers depends on the number of the fingers, the number n of paths to be notified to the step 2 allocation section 25 may be, for example, about twice as large as that of fingers (the paths detected at the step 1 include all multi-paths and the paths of the other sectors).

The step 2 allocation section 25 which has received the predetermined number "n" of paths, allocates s-SCHs corresponding to, for example, p-SCHs of the "n" extracted paths to the s-SCH detection/verify processing section 3 (at step S17). That is, the detection timings of "n" s-SCHs are allocated to the s-SCH detection/verify processing section 3.

Thereafter, the s-SCH detection/verify processing section 3 executes the processings of the step 2, step 3, and the verify processing as in the case of the conventional art (at step S18). According to the conventional art, the processings of the step 1, step 2, step 3, and the verify processing are repeatedly executed by the pipeline processing until the processing of the step 2 to the verify processing are conducted to all the detected 64 paths (the step 1 is also repeatedly executed: see Fig. 10). In this embodiment, by contrast, the step 1 is executed only once and then the processing of the step 2 to the verify processing are conducted to the "n" extracted paths. In other words, in this embodiment, the processing of the step 1 is not repeatedly executed.

As can be seen, in this embodiment, the maximum correlation detected paths are detected from the detected paths, the autocorrelation values of multi-paths around the received maximum correlation detected paths are corrected to thereby suppress the multi-paths, multi-paths within a predetermined number of chips around the maximum correlation detected paths are deleted, and only the paths having a maximum correlation value after the correction are extracted. A series of these processings are repeatedly executed until a desired number of paths can be acquired. It is, therefore, possible to considerably shorten processing time required for cell search control compared with the conventional art in which the step 2 and the following processings are conducted to the 64 detected paths.

Since the processing time required for cell search control can be shortened, the probability that the verify (RAKE-SRC) processing for verifying that the detection result of the step 3 is correct and the level detection processings (RAKE-SRC) are simultaneously executed is decreased. It is, therefore, possible to prevent processing time required for preferential control from increasing.

Since the processing time required for cell search control is shortened and only necessary, minimum most probable paths are extracted, it is possible to enhance receiving characteristic due to the DHO effect.

### Third Embodiment:

Fig. 6 is a diagram which shows the internal configuration of a cell search control section 1 in a third embodiment. Reference numeral 31 denotes a step 1 detected path acquisition section, 32 denotes a number-of-detected-paths determination section, and 33 denotes a step 1 threshold control section. Fig. 7 is a flow chart which shows a cell search control method in the third embodiment.

Since the overall configuration of the cell search control device is the same as that shown in Fig. 1 related to the first embodiment, same constituent elements are denoted by the same reference numeral and will not be explained herein. Therefore, in this embodiment, the number of step 1 detected paths is limited for the same reason as that explained above, whereby time required for cell search control is shortened, and only necessary, minimum most probable paths are extracted.

A cell search control method in this embodiment, i.e., a path control method at a step 1 will next be explained in detail with reference to the drawings. As for the operations of a step 2 and the following, the cell search control method is the same as the conventional cell search control method except that the number of allocated s-SCH receiving timings is decreased. Further, this embodiment is based on the assumption that a threshold S1THLEV2 for path detection ("path detection threshold") for detecting paths having levels equal to or higher than a certain value relative to an interference level is preset in the p-SCH detection section 2 (at step S21).

At a mobile station, the p-SCH detection section 2 detects, for example, p-SCHs of paths having levels equal to or higher than the path detection threshold S1THLEV2 as the processing of the step 1 (at step S22), and notifies the step 1 detected path acquisition section 31 of the detection result. The step 1 detected path acquisition section 31 receives the detection result and notifies the number-of-detected-paths determination section 32 of the detection result.

The number-of-detected-paths determination section 32 first determines the number of detected paths x from the detection result (at step S23). If the number of detected paths x is smaller than a detected upper limit threshold S1THH and larger than a detected lower limit threshold S1THL (No at step S23 and No at step S29, respectively), then the number-of-detected-paths determination section 32 holds the path detection threshold S1THLEV2.

If the processing of the step S23 shows that the number of detected paths x is equal to or larger than the detected upper limit threshold S1THH (Yes at step S23), the number-of-detected-paths determination section 32 assigns 0 to the number of times M by which the number of detected paths is equal to or smaller than S1THL (at step S24), and it is further detected whether or not the number of detected paths x is equal to or larger than a detected excess threshold S1THH2 (at step S25). If the number of detected paths x is equal to or larger than the detected excess threshold S1THH2 (Yes at step S25), the step 1 threshold control section 33 increments the path detection threshold S1THLEV2 preset in the p-SCH detection section 2 by a predetermined number LVLSTP (at step S28). On the other hand, if the number of detected paths x is smaller than the detected excess threshold S1THH2 (No at step S25), the step 1 threshold control section 33 adds 1 to the number of times N by which the number of detected paths is equal to or larger than S1THH (at step S26). Further, if the number of times N reaches the number of protection stages UPROT adopted if the number of detected paths is large (Yes at step S27), the step 1 threshold control section 33 increments the path detection threshold S1THLEV2 by the predetermined number LVLSTP (at step S28). If the number of times N does not reach the number of protection stages UPROT (No at step S27), the step 1 threshold control section 33 does not update the current path detection threshold S1THLEV2. The p-SCH detection section 2 then detects again p-SCHs of paths having levels equal to or higher than the path detection threshold S1THLEV2 (at step S22).

If the processings of the steps S23 and S29 show that the number of detected paths x is equal to or smaller than the detected lower limit threshold S1THL (No at step S23 and Yes at step S29), the number-of-detected-paths determination section 32 assigns 0 to the number of times N by which the number of detected paths is equal to or larger than S1THH (at step S30), and further determines whether or not the number of detected paths x is equal to or smaller than a detected insufficient threshold S1THL2 (at step S31). If the number of detected paths x is equal to or smaller than the detected insufficient threshold S1THL2 (Yes at step S31), the step 1 threshold control section 33 decrements the path detection threshold S1THLEV2 preset in the p-SCH detection section 2 by the predetermined number LVLSTP (at step S34). On the other hand, if the number of detected paths x is larger than the detected insufficient threshold S1THL2 (No at step S31), the step 1 threshold control section 33 adds 1 to the number of times M by which the number of detected paths is equal to or larger than S1THL (at step S32). Further, if M reaches the number of protection stages LPROT adopted when the number of detected paths is small (Yes at step S33), the step 1 threshold control section 33 decrements the path detection threshold S1THLEV2 by the predetermined number LVLSTP (at step S34). If M does not reach the number of protection stages LPROT (No at step S33), the step 1 threshold control section 33 does not update the current path detection threshold S1THLEV2. Thereafter, the p-SCH detection section 2 detects again p-SCHs of paths having levels equal to or higher than the path detection threshold S1THLEV2 (at step S22).

The number-of-detected-paths determination section 32 then repeatedly executes the processings of the steps S22 to S34 until, for example, the number of detected paths x becomes smaller than the detected upper limit threshold S1THH and larger than the detected lower limit threshold S1THL (No at step S23 and No at step 29, respectively).

As can be seen, in this embodiment, the path detection threshold is adjusted and the path detection processings are repeatedly executed until the number of detected paths becomes smaller than the detected upper limit (less than 64) and larger than the detected lower limit. By so constituting, it is possible to considerably shorten the processing time required for cell search control compared with the conventional art in which the processings after the step 2 are conducted to the 64 detected paths.

Since the processing time required for cell search control can be shortened, the probability that the verify (RAKE-SRC) processing for verifying that the detection result of the step 3 is correct and the level detection processing (RAKE-SRC) are simultaneously executed is decreased. It is, therefore, possible to prevent processing time required for preferential control from increasing.

Since the processing time required for cell search control is shortened and only necessary, minimum most probable paths are extracted, it is possible to enhance receiving characteristic due to the DHO effect.

As explained so far, according to the present invention, maximum correlation detected paths are detected from the detected paths and the correlation values of the multi-paths around the received maximum correlation detected paths are corrected, whereby "n" paths having higher correlation values among the corrected correlation values are extracted and the receiving timing of the extracted "n" paths are allocated to the second synchronization unit. It is thereby advantageously possible to obtain the cell search control device capable of considerably shortening the processing time required for the cell search control compared with the conventional art in which the processings of the step 2 and on are conducted to all the 64 detected paths.

According to the next invention, maximum correlation detected paths are detected from the detected paths, the autocorrelation values of multi-paths around the received maximum correlation detected paths are corrected to thereby suppress the multi-paths, multi-paths within a predetermined number of chips around the maximum correlation detected paths are deleted, and only the paths each having a maximum correlation value after the correction are extracted. A series of these processings are repeatedly executed until a desired number of paths can be acquired or there is no path detected after the multi-paths are deleted/corrected. It is thereby advantageously possible to obtain the cell search control device capable of considerably shortening the processing time required for the cell search control compared with the conventional art in which the processings of the step 2 and on are conducted to all the 64 detected paths.

According to the next invention, the path detection threshold is adjusted and the path detection processings are repeatedly executed until the number of detected paths becomes smaller than the detected upper limit threshold and larger than the detected lower limit threshold. It is thereby advantageously possible to obtain the cell search control device capable of considerably shortening the processing time required for the cell search control compared with the conventional art in which the processings of the step 2 and on are conducted to all the 64 detected paths.

According to the next invention, maximum correlation detected paths are detected from the detected paths and the correlation values of the multi-paths around the received maximum correlation detected paths are corrected, whereby "n" paths having higher correlation values among the corrected correlation values are extracted and the receiving timing of the detected "n" paths are allocated to the second synchronization unit. It is thereby advantageously possible to considerably shortening the processing time required for the cell search control compared with the conventional art in which the processings of the step 2 and on are conducted to all the 64 detected paths.

According to the next invention, maximum correlation detected paths are detected from the detected paths and the correlation values of multi-paths around the received maximum correlation detected paths are corrected to thereby suppress the multi-paths, multi-paths within a predetermined number of chips around the maximum correlation detected paths are deleted, and only the paths each having a maximum correlation value after the correction are extracted. A series of these processings are repeatedly executed until a desired number of paths can be acquired. It is thereby advantageously possible to considerably shortening the processing time required for the cell search control compared with the conventional art in which the processings of the step 2 and on are conducted to all the 64 detected paths.

According to the next invention, the path detection threshold is adjusted and the path detection processings are repeatedly executed until the number of detected paths becomes smaller than the detected upper limit threshold and larger than the detected lower limit threshold. It is thereby advantageously possible to considerably shortening the processing time required for the cell search control compared with the conventional art in which the processings of the step 2 and on are conducted to all the 64 detected paths.

### INDUSTRIAL APPLICABILITY

As explained so far, the cell search control device and the cell search control method according to the present invention are suited to extract only necessary, minimum most probable paths in short time and are effective for the W-CDMA system.

## Claims

1. A cell search control device comprising:
a first synchronization establishment unit which establishes slot timing synchronization;
a second synchronization establishment unit which establishes frame timing synchronization and specifies a scrambling code group; and
a code specification unit which specifies a scrambling code, wherein
the first synchronization establishment unit includes
a path detection unit which detects p-SCH (Primary-synchronization channel) having a specified number of paths,
a path extraction unit which extracts n (an arbitrary natural number) paths having higher correlation values from the detected paths, and
an allocation unit which allocates detection timings of s-SCH (Secondary-synchronization channel) corresponding to the n paths, to the second synchronization establishment unit.

2. A cell search control device comprising:
a first synchronization establishment unit which establishes slot timing synchronization;
a second synchronization establishment unit which establishes frame timing synchronization and specifies a scrambling code group; and
a code specification unit which specifies a scrambling code, wherein
the first synchronization establishment unit includes
a path detection unit which detects p-SCH having a specified number of paths,
a maximum correlation path extraction unit which extracts paths having maximum correlation from the detected paths,
a multi-path deletion unit which deletes multi-paths within a predetermined number of chips (predetermined transmission time intervals of respective base stations) around the maximum correlation paths, and
an allocation unit which allocates detection timings of s-SCH corresponding to n paths extracted by n times from the maximum correlation path extraction unit, to the second synchronization establishment unit.

3. A cell search control device comprising:
a first synchronization establishment unit which establishes slot timing synchronization;
a second synchronization establishment unit which establishes frame timing synchronization and specifies a scrambling code group; and
a code specification unit which specifies a scrambling code, wherein
the first synchronization establishment unit includes
a path detection unit which detects p-SCH having paths with levels equal to or higher than a preset path detection threshold,
a path detection threshold update unit which updates the path detection threshold corresponding to the number of detected paths, and
an allocation unit which allocates detection timings of s-SCH corresponding to the detected paths, to the second synchronization establishment unit.

4. A cell search control method comprising:
a first step of establishing slot timing synchronization; a second step of establishing frame timing synchronization and specifying a scrambling code group; and
a third step of specifying a scrambling code, wherein
the first step includes
a path detection step of detecting p-SCH having a specified number of paths,
a path extraction step of extracting n paths having higher correlation values, from the detected paths, and
an allocation step of allocating detection timings of s-SCH corresponding to the n paths, to processing sections for the second step and on.

5. A cell search control method comprising:
a first step of establishing slot timing synchronization; a second step of establishing frame timing synchronization and specifying a scrambling code group; and
a third step of specifying a scrambling code, wherein
the first step includes
a path detection step of detecting p-SCH having a specified number of paths,
a maximum correlation path extraction step of extracting paths having maximum correlation from the detected paths,
a multi-path deletion step of deleting multi-paths within a predetermined number of chips (predetermined transmission time intervals of respective base stations) around the maximum correlation paths,
a repetition step of repeatedly executing the maximum correlation path extraction step and the multi-path deletion step using the remaining detected paths until maximum correlation paths are extracted by n, and
an allocation step of allocating detection timings of s-SCH corresponding to the extracted "n" paths, to processing sections for the second step and on.

6. A cell search control method comprising:
a first step of establishing slot timing synchronization; a second step of establishing frame timing synchronization and specifying a scrambling code group; and
a third step of specifying a scrambling code, wherein
the first step includes
a path detection step of detecting p-SCH having paths with levels equal to or higher than a preset path detection threshold,
an allocation step of allocating detection timings of s-SCH corresponding to the detected paths, to processing sections for the second step and on if the number of detected paths is smaller than a detected upper limit threshold and larger than a detected lower limit threshold,
a first path detection threshold update step of incrementing a path detection threshold by a predetermined number if the number of detected paths becomes equal to or larger than a detected excess threshold (the detected upper limit threshold < the detected excess threshold),
a second path detection threshold update step of incrementing the path detection threshold by the predetermined number, if the number of detected paths becomes equal to or larger than the detected upper limit threshold and smaller than the detected excess threshold and the number of times by which the number of detected paths becomes equal to or larger than the detected upper limit threshold, reaches a predetermined number,
a third path detection threshold update step of holding a current path detection threshold, if the number of times by which the number of detected paths becomes equal to or larger than the detected upper limit threshold and smaller than the detected excess threshold, does not reach the predetermined number,
a fourth path detection threshold update step of decrementing the path detection threshold by the predetermined number if the number of detected paths is equal to or smaller than a detected insufficient threshold (the detected lower limit threshold > the detected insufficient threshold),
a fifth path detection threshold update step of decrementing the path detection threshold by the predetermined number, if the number of times by which the number of detected paths becomes equal to or smaller than the detected lower limit threshold and larger than the detected insufficient threshold, reaches a predetermined number, and
a sixth path detection threshold update step of holding a current path detection threshold, if the number of times by which the number of detected paths becomes equal to or smaller than the detected lower limit threshold and larger than the detected insufficient threshold, does not reach the predetermined number.
